# EUROPEAN PATENT SPECIFICATION

(11) **EP 3 300 684 B1**
(45) Date of publication and mention of the grant of the patent: **15.01.2020**
(21) Application number: 16191797.6
(22) Date of filing: 30.09.2016
(51) Int. Cl.: A61C 1/00

(54) **FLUID DISTRIBUTING DEVICE**
FLÜSSIGKEITSVERTEILUNGSVORRICHTUNG
DISPOSITIF DE DISTRIBUTION DE FLUIDE

(43) Date of publication of application: 04.04.2018
(73) Proprietor: Ferton Holding S.A., 2800 Delémont (CH)
(72) Inventor: Lebreton, Etienne, 1023 Crissier (CH)
(74) Representative: Müller Schupfner & Partner Patent- und Rechtsanwaltspartnerschaft mbB

(56) References cited:
- DE-B3-102012 014 857
- US-A- 4 193 197
- US-A- 5 785 523
- US-A1- 2003 077 552
- US-A1- 2007 148 615

## Description

The present invention refers to a fluid distributing device for distributing at least one fluid from at least one inlet to an outlet of the fluid distributing device.

Fluid distributing devices are needed for example for ultrasonic scaling devices which request irrigation liquid in order to wash/cool a patient's teeth, or for dental powder jet devices, which act with an air-powder mixture and water or a rinsing fluid. Fluid distributing devices are especially needed for combi-devices, including an ultrasonic scaling device and a dental powder jet device, such as for example the AIR-FLOW® MASTER PIEZON® device of the applicant.

Some fluid distributing devices have only a tap water connection, so that the only fluid that is released from the fluid distributing device is the tap water. Such devices need not to be refilled. However, such devices cannot be supplied with a medical solution like an irrigation fluid or a saline liquid or the like.

Other fluid distributing devices are provided with a container connection, but without tap connection. Such fluid distributing devices can supply any desired irrigation fluid comprised in the coupled container to the medical device. The container however needs to be refilled from time to time. Thus, the user of the fluid distributing device has to be sure that enough fluid is comprised within the container for a dental treatment.

Some high end fluid distributing devices, such as the AIR-FLOW® MASTER PIEZON® device, integrate both a tap water connection and a container connection. Such high end fluid distributing devices preferably use a combination of a peristaltic pump in order to control the liquid flow from the container, electronic valves in order to switch from a tap water supply to a container supply, and a command input, preferably in the shape of a button or a rotary switch, in order to give the input to the fluid distributing device. Such fluid distributing devices comprise several elements such as hydraulically and electrically moving valves combined with mechanical elements, which result in a complex system. Most of the used fluid distributing devices use a peristaltic pump which is not reliable with age since the elastomer of the flexible pipes or hoses, which are needed for a peristaltic pump, is aging. Furthermore, when the user wants to use a specific fluid and the container is not connected, the user has first to connect the container and then to select the correct button on the fluid distributing device such that the fluid flow from the container is allowed. In the case that the container is empty the fluid flow is interrupted, since the empty container does not provide further fluid and the water tap is closed further on.

US 5 785 523 A discloses a dental unit which includes a dental handpiece, through which water and a lubricant-disinfectant solution passes, a water line flushing and disinfecting system. The water source can be realized by a water bottle.

US 2003 077552 A1 deals with a dental apparatus comprising a dental handpiece that is connected with a fluid reservoir and a water supply line. The fluid reservoirs are for example designed as containers that have an one way valve configured for allowing a fluid stream when the container is connected on the dental apparatus.

US 2007 148615 A1 deals with an endodontic irrigating system that is capable of using ultrasonic energy for the treatment of a root canal and other dental areas. The system comprises at least one and preferably multiple solution reservoirs. DE 10 2012 014 857 B3 discloses a unit having two fluid containers, a fluid supply conduit for a dental treatment apparatus and a 3/2-way valve for optional connecting one of the fluid containers with the fluid supply conduit.

It is an object of the invention to overcome the drawbacks of the prior art devices and to make the use simpler and more reliable.

This object is achieved by a fluid distributing device according to claim 1 and the container according to claim 16. Advantageous embodiments of the present invention are described in the dependent claims.

According to the present invention, a fluid distributing device for distributing at least one fluid from at least one inlet to an outlet of the fluid distributing device is provided. The fluid distributing device comprises a device housing having an outlet coupled to a valve for releasing the fluid from a container or a fluid-source; a gas inlet for receiving a gaseous fluid from a gas source; a container inlet for receiving a container-fluid from the container, and a source-inlet for receiving a source fluid from the fluid-source. Each inlet is connectable or coupled with a valve for receiving the corresponding fluid, wherein the fluid passing through one of the inlets each flows along a predetermined path of the device housing. The fluid distributing device is configured to switch between a first state, in which the fluid is received from the source-inlet being connected to the fluid-source, and a second state into which the fluid distributing device is automatically switched to, when the container comprising the container fluid is coupled to the container-inlet for receiving the container fluid from the container.

By coupling the container to the container-inlet, the second state is automatically reached, so that the fluid distributing device is supplied with the container fluid. Preferably, at the same time, gas from a gas inlet from a gas source is lead to the container so as to pressurize the interior of the container and urge the fluid out of the container. That facilitates the comfort of the device. If the container is empty, the device automatically switches back to the first state, thereby allowing the source fluid to flow to the outlet.

Therewith, the supply with a fluid is continuously provided, no matter if the fluid distributing device acts in the first state or in the second state. This has the advantage that the use of the fluid distributing device is improved since the fluid distributing device is enabled to supply a fluid continuously. Preferably, the fluid distributing device is provided with at least one tube or hose through which the fluid is enabled to flow into a medical device for example a scaler or blasting device for cleaning the teeth or both or the like.

According to an advantageous embodiment, the gas inlet being coupled with a gas valve is configured for receiving a gas, preferably air, upon switching to the second state, in order to guide the received gas from the gas inlet along its corresponding, preferably interior, gas path into the container, while the container releases the container fluid which is guided from the container inlet along its corresponding container path to the outlet. In the second state the gas inlet as well as the container inlet are coupled with the container, in order to allow a releasing of the container fluid from the container. Since a gas, preferably air, is guided from the gas inlet via the gas path that is preferably located within the fluid distributing device, into the container, the pressure in the container rises and container fluid is displaced out from the container. The container fluid is guided via the container fluid path that is preferably located in the fluid distributing device to the outlet. In the second state the fluid distributing device is supplied with the container fluid, preferably, exclusively. The container fluid path and/or the gas fluid path might be located outside the fluid distributing device.

In the first state the source fluid is provided from the fluid-source (hereinafter also called "source") through the source inlet and guided through a device housing along its predetermined, preferably interior, source path to the outlet. The device housing provides preferably the source path, the container fluid path and the gas path. It is also possible that at least one path is located outside the device housing. In the first state the source fluid is guided directly from the source inlet to the outlet. In the first state the gas inlet does not receive gas from the gas source. Either the gas inlet is not coupled with the gas source or the gas inlet is coupled with the gas source, but the gas valve is closed such that no gas flows into the gas path. The source fluid is preferably provided from a water tap, such as a water supply of a dentist chair, that can continuously supply water to the outlet of the fluid distributing device.

The container comprising the container fluid is provided with a container mass, which with increasing loss of the container fluid decreases, wherein the fluid distributing device is configured to automatically switch back from the second state to the first state, when a predetermined threshold of the container mass is reached. The threshold is preferably the container mass without the fluid or essentially without the container fluid, however a little amount of the container fluid may be maintained within the container while the automatically switching back from the second state to the first state is performed. When switching back to the first state the fluid supply is provided again from the fluid-source, preferably the water tap. The container-fluid is a liquid, preferably water or a medical solution or a saline solution or a mixture thereof. The automatically switching between the first and the second state and vice versa allows a continuous use no matter if the container fluid is used up, i.e. is empty.

According to an advantageously embodiment the container valve for the container-inlet is provided within the fluid distributing device or within a bottle cap. Either a bi-directional container valve is provided which allows a fluid flow from the container to the fluid path and a gas flow from the gas path into the container at the same time, or at least two single directional valves are provided, wherein one valve allows the container-fluid to flow from the container into the fluid path while the second valve allows the gas to flow from the gas path into the container. In the following the container valve is described in singular. However, in the case several container valves are used, the plural form is to be applied accordingly. In the case that the container valve is provided within the fluid distributing device the container valve is provided for several uses. Preferably the container valve is provided at a receiving member of the fluid distributing device, preferably the receiving member is extending to the outside of the fluid distributing device. Further, preferably the receiving member is attached to the fluid distributing device such that when a container is connected to the fluid distributing device, the container-fluid is entering the fluid path by gravity, i. e. the receiving member is attached to the fluid distributing device preferably on top of the fluid distributing device.

According to an advantageously embodiment the fluid distributing device further comprises a plunger and a volume extending along an axial direction being parallel with a longitudinal extension of the plunger, wherein the plunger is displaceable along the axial direction between the first and the second state. The plunger is either coupled with the device housing preferably close by or next to the receiving member or is coupled to a base of the fluid distributing device being located opposite to the receiving member. By displacing the plunger the switch from the first to the second state and vice versa is performed. Preferably by placing the container onto the receiving member, i.e. by coupling the container with the fluid distributing device, the plunger is displaced so that the plunger is connected with both, the device housing and the base. The gas path is completed via the base and the device housing, while the container-fluid path is completed via the device housing. Preferably the functioning of the gas path and the container-fluid path is depending on each other. This means that the container fluid can only be released from the container, if gas from the gas path can enter the container.

According to an advantageously embodiment the plunger is engaged at one end to the container-inlet or to the gas-inlet, while the other end is detachably engageable or connectable or coupled to the gas inlet or the container-inlet respectively, preferably when the plunger is moved along the axial direction for reaching the second state. When the plunger is displaced in order to reach the second state, the plunger is coupled to the gas inlet as well as to the container inlet. In the second state the plunger provides the gas path, so that gas from the gas inlet can enter the container which in turn releases the container fluid.

According to an advantageously embodiment the plunger is provided with a hollow inside, wherein the hollow inside provides a predetermined interior gas path for guiding the gas from the gas-inlet to an inside of the container. The gas path is separated from the container fluid path and from the source fluid path. This has the advantage that the fluid will not be mixed with the gas.

Preferably, the plunger is displaced automatically along the axial direction in direction towards a base of the fluid distributing device when the container is coupled to the container-inlet for achieving a connection between the container-inlet and the gas-inlet, wherein the base is located opposed to the container inlet. By realizing the connection between the container-inlet and the gas-inlet the gas path is formed.

Preferably, a projection extending from the base along the axial direction towards the plunger is provided for receiving the plunger in the second state. The projection facilitates the receiving of the plunger. The projection may be provided with a hollow inside and/or may be conically shaped. When the plunger is guided into the projection the plunger will be coupled to the gas inlet automatically for achieving the second state.

Further preferably, the projection is accommodated by a tension element for providing a tension loading for the displaceable plunger, preferably a spring is provided, which provides a spring loading when compressed by the displaceable plunger. Preferably the tension element is given by a helical spring, which is compressed when the plunger is displaced or received by the projection respectively. When the container-fluid is essentially completely released, i.e. when the threshold is reached, the load of the tension element is greater than the gravitational force exercised by the container, so that the tension element is pushing the plunger back which results in a detaching of the plunger from the gas inlet. The plunger is displaced from the second state into the first state when the load of the tension element is greater than the gravitational force exercised by the container. This has the advantage that the fluid distributing device is automatically switched between the first and the second state.

Inside the device housing a plunger housing accommodating the plunger is provided defining a predetermined container fluid path for the container fluid and/or at least partially a source fluid path for the source fluid. Preferably the plunger housing is accommodated by the device housing of the fluid distributing device. The outside of the plunger and the inside of the plunger housing form the container fluid path along which the container fluid may flow from the container to the outlet. Preferably the source fluid may flow along the fluid path which at least partially is formed between the outside of the plunger and the inside of the plunger housing.

The plunger housing comprises at least one through-hole, preferably at least two through holes, for guiding the container fluid or the source fluid inside and outside the plunger housing. The at least one through-hole is preferably located close to the outlet. The at least one through-hole serves therewith as a guide for the source fluid or container fluid released from the fluid distributing device into a tube or the like. The plunger housing is, preferably fixedly, connected to the device housing. When the plunger is displaced it is relatively displace to the plunger housing. The at least one through-hole is therewith fixedly positioned.

According to an advantageously embodiment the container inlet is provided with a bi-directional container valve or with two one-directional container valves for releasing the fluid from the container into the fluid distributing device and for receiving the gas from the fluid distributing device for guiding it into the container. Either a bi-directional container valve is provided which allows a fluid flow from the container to the fluid path and a gas flow from the gas path into the container at the same time, or at least two one-directional valves are provided, wherein one valve allows the container-fluid to flow from the container into the fluid path while the second valve allows the gas to flow from the gas path into the container.

According to an advantageously embodiment the outlet and/or the gas-inlet and/or the source-inlet are provided with one-directional valves. Since a back flow is not desired one-directional valve are preferably provided with the outlet, wherein each valve allows a fluid to flow in a particular direction.

Preferably the source valve of the source-inlet is closed when switching to the second state and opened when switching to the first state. By closing the source valve when the fluid distributing device is in the second state it is avoided that fluid from the fluid-source is provided and mixed with the container fluid. Additionally it is avoided that the fluid-source enter the container. The container fluid is not contaminated with the source fluid.

According to an advantageously embodiment the fluid distributing device comprises an intake for receiving the container, preferably which is conically shaped for providing a guidance of the container. Preferably, the intake comprises a receiving member that is conically shaped. The container that is coupled to the fluid distributing device is provided with a complementary, preferably conically, shaped container cap.

According to an advantageously embodiment the fluid distributing device is provided with a magnetic ring for coupling the container and the fluid distributing device, wherein the magnetic ring is provided between an abutting surface of both, preferably the magnetic ring comprises a metal or a metal charged plastic. To further fix the container to the fluid distributing device the magnetic ring is provided. It is also possible to provide surfaces between the container and the fluid distributing device that are provided with an increased friction, when abutting to each other.

According to an advantageously embodiment the container comprises a container base and a cap, wherein the container base and/or the container cap being opposed to each other are conically shaped. The conical shape of the container cap facilitates the introducing of the container into the fluid distributing device and in particular into the intake or receiving member of the fluid distributing device. Furthermore the conical shape of the base of the container and of the container cap enables a container fluid flow the container is empty, i.e. until last drops.

In the following, the invention is described based on preferred embodiments which are schematically shown in the enclosed figures:
- Fig. 1: shows a functional scheme of the fluid distributing device according to the invention in the first state in which the container is detached;
- Fig. 2: shows a functional scheme of the fluid distributing device according to Figure 2, but in the second state in which the container is coupled to the fluid distributing device;
- Fig. 3: shows a side view of the fluid distributing device without container, i.e. in the first state;
- Fig. 4: shows a side view of the fluid distributing device with a container connected to the fluid distributing system, i.e. in the second state;
- Fig. 5: shows a zoom of a cross-sectional view according to Fig. 3 indicating the fluid flow from the source inlet to the outlet;
- Fig. 6: shows a zoom of a cross-sectional view according to Fig 4 indicating the fluid flow from the container inlet to the outlet and the gas flow;
- Fig. 7: shows a zoom of the gas inlet of the fluid distributing device;
- Fig. 8: shows a zoom of the outlet of the fluid distributing device, and
- Fig. 9: shows the container on top of the fluid distributing device in a not coupled state of the container.

Equal or equally acting elements are in all figures identified by the same reference numerals.

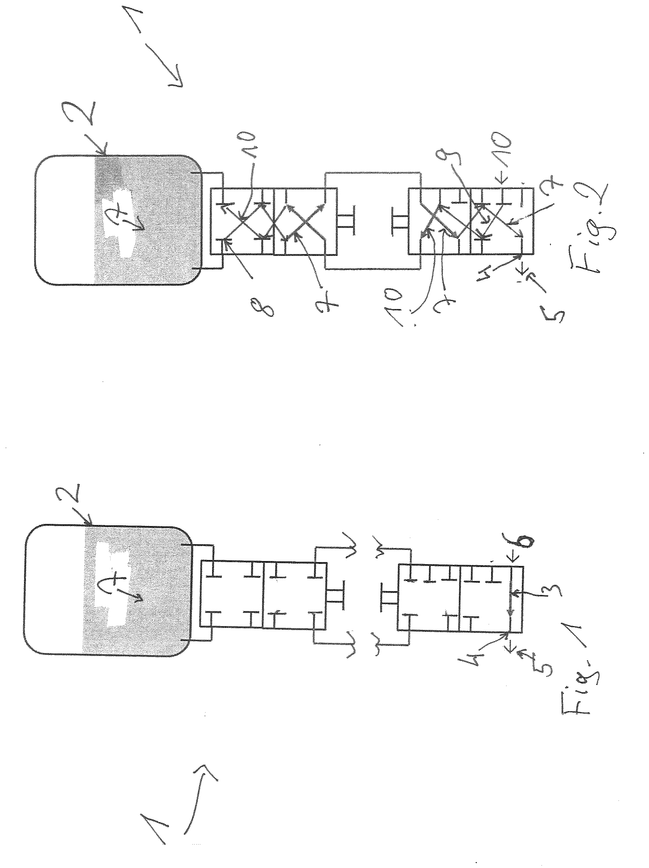

Fig. 1 shows a functional scheme of the fluid distributing device 1 according to the invention in the first state in which a container 2 is not connected with the fluid distributing device 1. Fig. 2 shows a functional scheme of the fluid distributing device 1 according to the invention in the second state in which the container 2 is connected with the fluid distributing device 1.

In the first state the source fluid 3 to be supplied from the fluid distributing device 1 is released from the outlet 4 in a direction indicated by arrow 5. The source fluid 3 enters the fluid distributing device 1 via a source inlet 6 and is provided by a source (not shown), preferably a water tap allowing to supply the source fluid 3, i.e. tap water, continuously. In the second state the fluid distributing device 1 is coupled with the container 2 comprising a container fluid 7. The container fluid 7 enters the fluid distributing device 1 via a container inlet 8, while a gaseous fluid 9 enters the fluid distributing device 1 via a gas inlet 10 and flows into the container 2 for releasing the container fluid 7 from the container 2. The gaseous fluid can be air from the surrounding or from a gas bottle or whatsoever. While the fluid distributing device 1 is in the second state no source fluid 3 is supplied, and while the fluid distributing device 1 is in the first state no container fluid 7 and no gaseous fluid 9 is supplied. The corresponding valves are closed in each state, i.e. in the second state for example the gas valve 50 and/or the container valve 49 is/are closed, so that the release of the container fluid 7 is stopped, while in the first state the source valve 48 is closed for stopping the supply from the source.

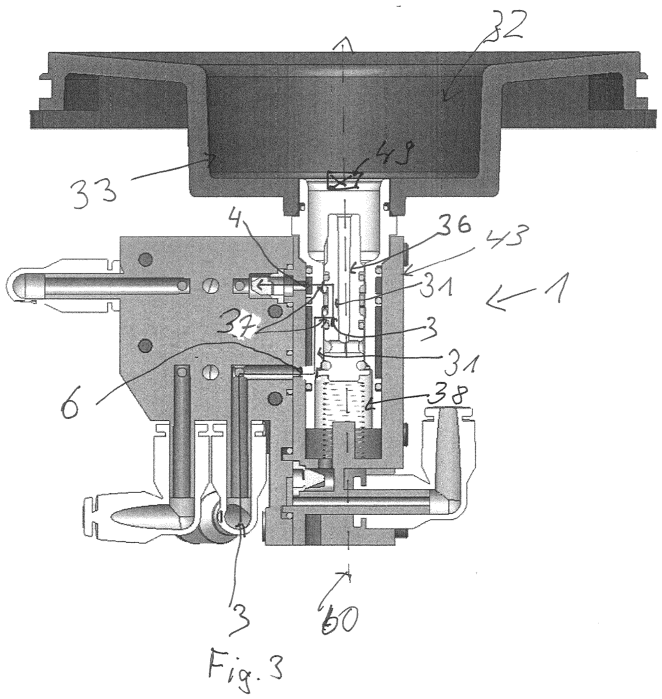

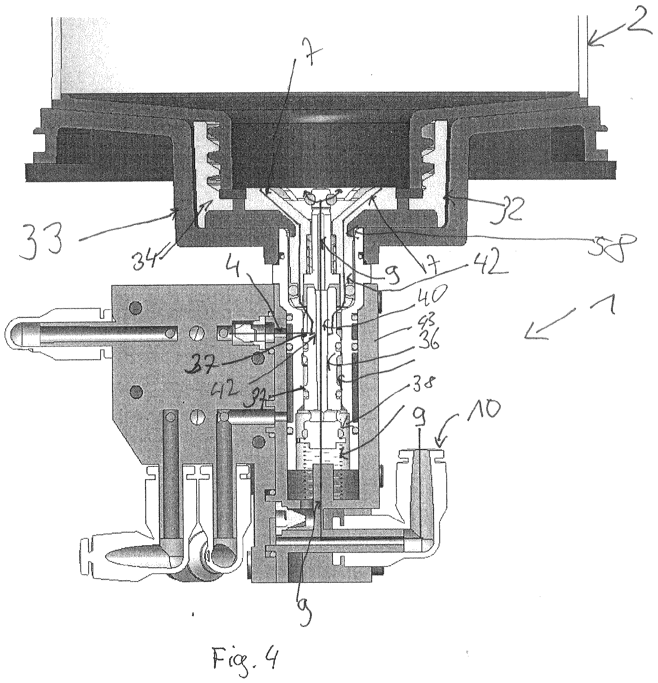

Fig. 3 shows a side view of the fluid distributing device 1 without a container 2 being connected to an intake 32 in form of a receiving member 33. The source fluid 3 enters the fluid distributing device 1 via the source inlet 6 and flows through the fluid distributing device 1 along a source path 31 to the outlet 4. The receiving member 33 or the intake 32 inside the receiving member 33 is, preferably slightly, conically shaped for allowing a nearly entire release of the container fluid 7, if a container 2 is coupled to the receiving member 33. Such a situation is shown in Fig. 4. The container 2 is coupled to the receiving member 33 of the fluid distributing device 1. The container 2 is additionally fixed to the fluid distributing device 1 via a magnetic ring 58, that might be of magnetic material or that might comprise the same. The magnetic ring is preferably fixed to a device housing 43 of the fluid distributing device. The device housing 43 accommodates a plunger housing 44.

By inserting a container cap 34 of the container 2 into the intake 32, the container is coupled to the fluid distributing device, which automatically switches from the first state (shown in Fig. 3) into the second state (shown in Fig. 4). During switching from the first stated to the second state a plunger 36 is displaced along its axial direction 60 towards a base 38 of the fluid distributing device 1. As soon as the base 38 is reached the plunger 36 is coupled to the gas inlet 10. Through the gas inlet 10 the gaseous fluid 9 enters the fluid distributing device 1. The plunger 36 is hollow in the inside and provides a gas path 40 for the gaseous fluid 9 that is guided into the container 2. While the gaseous fluid 9 flows via the gas path 40 into the container 2, the container fluid 7 is released via a container path 42 in the fluid distributing device to the outlet 4. The plunger 36 is accommodated in a plunger housing 44. The inside of the plunger housing 44 and the outside of the plunger 36 shape the container path along which the container fluid 7 flows from the container 2 to the outlet 4. Furthermore the plunger housing comprises at least one through hole 37, through which the container fluid 7 or the source fluid 3 may pass for reaching the outlet 4.

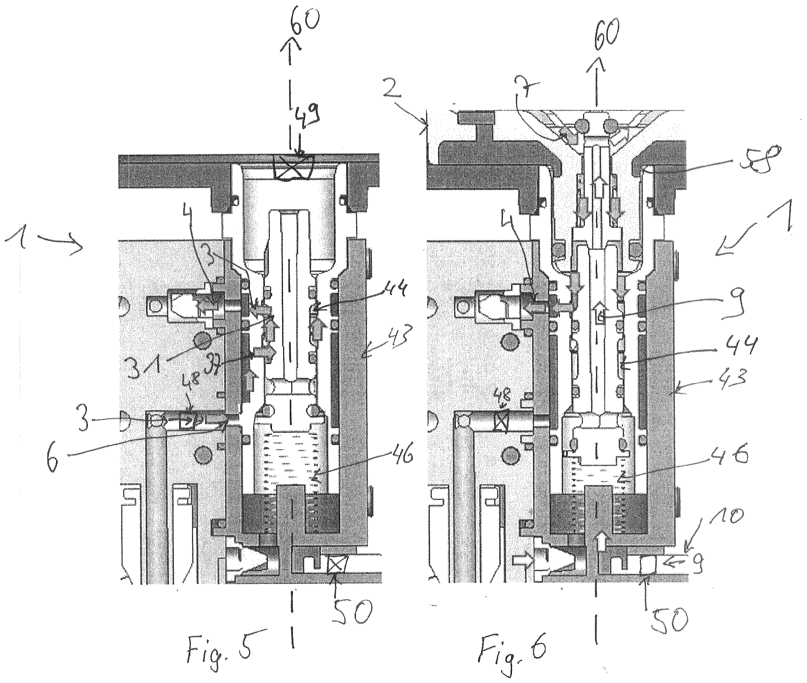

Fig. 5 shows a zoom of a cross-sectional view according to Fig. 3, where the fluid distributing device 1 is in the first state. The arrows in Fig. 5 indicate the source path 31 of the source fluid 3 starting from the source inlet 6 and ending at the outlet 4. In the first state the plunger 36 does not compress the tension element 46, which may be a helical spring. In the first state a source valve 48 is in a flow mode that allows the source fluid 3 to enter the fluid distributing device 1. A gas valve 50 located at the gas inlet 10 is in a closed mode, such that it does not allow the gaseous fluid 9 to enter the fluid distributing device 1.

Fig. 6 shows a zoom of a cross-sectional view according to Fig. 4, where the fluid distributing device 1 is in the second state. The dark arrows in Fig. 6 indicate the container path 42 of the container fluid 7 and the light arrows indicate the gas path 40 of the gaseous fluid 9. The container path 42 is starting from the container inlet 8 and is ending at the outlet 4. The gas path 40 is starting from the gas inlet 10 and end in the container cap 34 of container 2. In the second state the plunger 36 compresses the tension element 46, which may be a helical spring. In the second state a gas valve 50 is in a flow mode that allows the gaseous fluid 9 to enter the fluid distributing device 1. Further, the source valve 48 is in a closed mode, such that it does not allow the source fluid 3 to enter the fluid distributing device 1. The container cap 34 or the receiving member 33 are provides preferably with a bi-directional container valve (not shown), the allows the gaseous fluid 9 to enter the container 2 in one direction and that allows the container fluid 7 to enter the fluid distributing device 1 along the container path 42 in a opposite direction. In the second state the tension element 46 is loaded due to the gravitational force that is exercised because of the coupling of the container 2 comprising the container fluid 7. When the container fluid 7 is released over time from the container 2 because of use of the fluid distributing device 1, the entire mass of the container including the container fluid decreases. When a threshold is reached, that is when the gravitational force is smaller than the load of the tension element 46 the plunger 36 is pushed back, such that the tension element relaxes. In this situation the fluid distributing device 1 is automatically switched from the second state (shown in Fig. 6) to the first state (shown in Fig. 5). As can be seen from Figs. 5 and 6 the tension element 46 accommodates the base 38 receiving the plunger 36 in the second state.

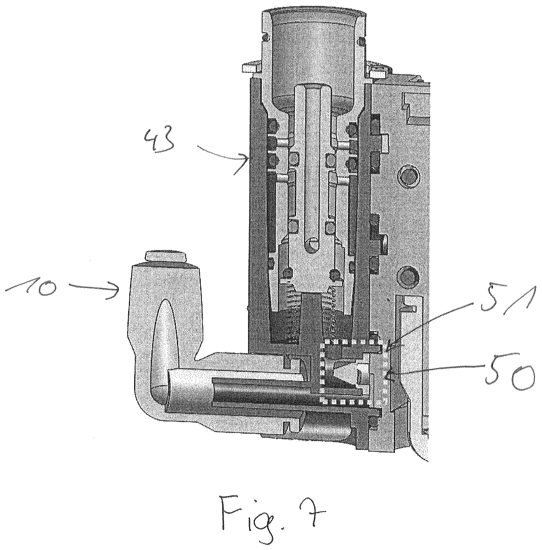

Fig. 7 shows a zoom of the gas inlet 10 that is provided with the gas valve 50 shown located in the dashed lined rectangle 51. The gas valve prevents the gas path 40 from being contaminated by the source fluid 3 and by the container fluid 7. Thus the gas valve 50 prevents the gas path 40 from contamination from any fluid other than the gaseous fluid 9 from the gas source.

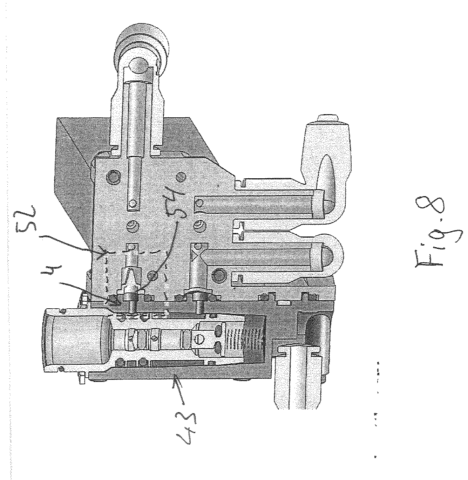

Fig. 8 shows a zoom of the outlet 4 of the fluid distributing device 1. The outlet 4 is provided with an outlet valve 54 shown located in the dashed lined rectangle 52. The outlet valve 54 prevents the container fluid 7 or the source fluid 3 leaving the fluid distributing device 1 from being contaminated by the gaseous fluid 9. Thus the outlet valve 54 prevents the container paths 42 and the source path 31 contamination from any gaseous fluid 9 from the gas source.

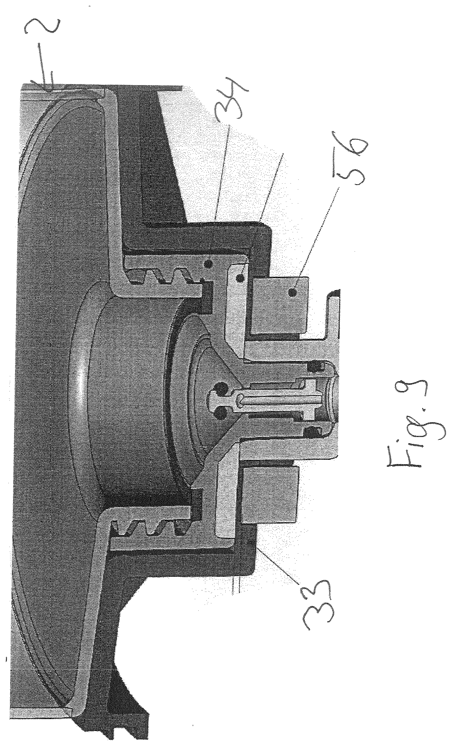

Fig. 9 shows a container 2 provided in its cap with the plunger 36. The container is provided on top of the fluid distributing device 1, wherein the container 2 is inserted into the intake 32 of receiving member 33 that is not connected to the fluid distributing 1 device. The release of the container fluid 71 and the receiving of the gaseous fluid 9 is blocked by an O-ring 56, which also block the displacement of the plunger 36.

### Reference numerals

- 1: fluid distributing device
- 2: container
- 3: source fluid
- 4: outlet
- 5: arrow
- 6: source-inlet
- 7: container fluid
- 8: container inlet
- 9: gaseous fluid
- 10: gas inlet
- 31: source path
- 32: intake
- 33: receiving member
- 34: container cap
- 36: plunger
- 37: through hole
- 38: base
- 40: gas path
- 42: container path
- 43: device housing
- 44: plunger housing
- 46: tension element
- 48: source valve
- 49: container valve
- 50: gas valve
- 51: dashed lined rectangle
- 52: dashed lined rectangle
- 54: outlet valve
- 56: O-ring
- 58: magnetic ring
- 60: axial direction

## Claims

1. Fluid distributing device (1) for distributing at least one fluid (3, 7, 9) from at least one inlet (6, 8, 10) to an outlet (4) of the fluid distributing device (1), comprising: a device housing (43) having
- an outlet (4) coupled to an outlet valve (54) for releasing said fluid (3, 7) from a container (2) or a fluid-source,
- a gas inlet (10) for receiving a gaseous fluid (9) from a gas source,
- a container inlet (8) for receiving a container fluid (7) from the container (2), and
a source inlet (6) for receiving a source fluid (3) from the fluid- source, wherein each inlet (6, 8, 10) is connectable or coupled with a respective valve (48, 49, 50) for receiving the corresponding fluid (3, 7, 9), wherein the fluid (3, 7, 9) passing through one of the inlets (6, 8, 10) each flows along a predetermined path (31, 40, 42) of the device housing (43), and
wherein the fluid distributing device (1) is configured to switch between a first state, in which the fluid (3) is received from the source inlet (6) being connected to the fluid-source, and a second state into which the fluid distributing device is automatically switched to, when the container (2) comprising the container fluid is coupled to the container inlet (8) for receiving the container fluid (7) from the container (2).

2. Fluid distributing device (1) according to claim 1, wherein the gas inlet (10), coupled with a gas valve (50), is configured for receiving a gaseous fluid (9), preferably air, upon switching to the second state, in order to guide the received gaseous fluid (9) from the gas inlet (10) along its corresponding, preferably interior, gas path (40) into the container (2), while the container (2) releases the container fluid (7) which is guided from the container inlet (8) along its corresponding container path (42) to the outlet (4).

3. Fluid distributing device (1) according to one of the preceding claims, wherein in the first state the source fluid (3) is provided from the fluid-source through the source-inlet (6) and guided through the device housing (43) along its predetermined, preferably interior, source path (31) to the outlet (4), and wherein the fluid distributing device (1) is automatically switched into said second state when the container (2), preferably comprising the container fluid (7), is coupled to the container inlet (8).

4. Fluid distributing device (1) according to one of the preceding claims, wherein the container (2), comprising the container fluid (7), is provided with a container mass, wherein the fluid distributing device (1) is configured to automatically switch back from the second state to the first state, when a predetermined threshold of the container mass is reached.

5. Fluid distributing device (1) according to one of the preceding claims, wherein the container valve (49) for the container inlet (8) is provided within the fluid distributing device (1) or within a container cap (34).

6. Fluid distributing device (1) according to one of the preceding claims, further comprising a plunger (36) and a volume extending along an axial direction (60), being parallel with a longitudinal extension of the plunger (36), wherein the plunger (36) is displaceable along the axial direction (60) between the first and the second state.

7. Fluid distributing device (1) according to claim 6, wherein the plunger (36) is engaged at one end to the container inlet (8) or to the gas inlet (10), while the other end is detachably engageable to the gas inlet (10) or the container inlet (8), respectively, preferably when the plunger (36) is moved along the axial direction (60) for reaching the second state.

8. Fluid distributing device (1) according to one of the claims 6 or 7, wherein the plunger (36) is provided with a hollow inside, wherein the hollow inside provides a predetermined interior gas path (40) for guiding the gaseous fluid (9) from the gas inlet (10) to an inside of the container (2).

9. Fluid distributing device (1) according to one of the claims 6 to 8, wherein the plunger (36) is displaced automatically along the axial direction (60) in a direction towards a base (38) of the fluid distributing device (1) when the container (2) is coupled to the container-inlet (8) for achieving a connection between the container inlet (8) and the gas-inlet (10), wherein the base (38) is located opposed to the container inlet (8).

10. Fluid distributing device (1) according to claim 9, wherein a projection extending from the base (38) along the axial direction (60) towards the plunger (36) is provided for receiving the plunger (26) in the second state and wherein the projection is accommodated by a tension element (46) for providing a tension loading for the displaceable plunger (36), preferably a spring is provided, which provides a spring loading when compressed by the displaceable plunger (36).

11. Fluid distributing device (1) according to one of the claims 6 to 10, wherein inside the device housing (43) a plunger housing (44) accommodating the plunger (36) is provided defining a predetermined container path (42) for the container fluid (7) and/or at least partially a source path (31) for the source fluid (3), and wherein the plunger housing (44) comprises at least one through-hole (37), preferably at least two through holes (37), for guiding the container fluid (7) or the source fluid (3) inside and/or outside the plunger housing (44).

12. Fluid distributing device (1) according to one of the preceding claims, wherein the container inlet (8) is provided with a bi-directional container valve or with two one-directional container valves (49) for releasing the container fluid (7) from the container (2) into the fluid distributing device (1) and for receiving the gaseous fluid (9) from the fluid distributing device (1) for guiding it into the container (2), and wherein the outlet (4) and/or the gas inlet (10) and/or the source inlet (6) are provided with one-directional valves (48, 50, 54).

13. Fluid distributing device (1) according to one of the preceding claims, wherein the source valve (48) of the source-inlet (6) is closed when switching to the second state and opened when switching to the first state.

14. Fluid distributing device (1) according to one of the preceding claims, wherein the fluid distributing device (1) comprises an intake (32) for receiving the container, preferably which is conically shaped for providing a guidance of the container (2).

15. Fluid distributing device (1) according to one of the preceding claims, wherein the fluid distributing device (1) is provided with a magnetic ring (58) for coupling the container (2) and the fluid distributing device (1), wherein the magnetic ring (58) is provided between an abutting-surface of both, preferably the magnetic ring (58) comprises a metal or a metal charged plastic.

## Patentansprüche

1. Fluidverteilungsvorrichtung (1) zum Verteilen mindestens eines Fluids (3, 7, 9) von mindestens einem Einlass (6, 8, 10) zu einem Auslass (4) der Fluidverteilungsvorrichtung (1), folgendes umfassend: ein Vorrichtungsgehäuse (43) mit
- einem mit einem Auslassventil (54) gekoppelten Auslass (4) zum Freisetzen des Fluids (3, 7) aus einem Behälter (2) oder einer Fluidquelle,
- einen Gaseinlass (10) zum Aufnehmen eines gasförmigen Fluids (9) von einer Gasquelle,
- einen Behältereinlass (8) zum Aufnehmen eines Behälterfluids (7) aus dem Behälter (2), und
einen Quelleinlass (6) zum Aufnehmen eines Quellfluids (3) von der Fluidquelle, wobei jeder Einlass (6, 8, 10) mit einem entsprechenden Ventil (48, 49, 50) zum Aufnehmen des entsprechenden Fluids (3, 7, 9) verbindbar oder gekoppelt ist, wobei das Fluid (3, 7, 9), das durch einen der Einlässe (6, 8, 10) strömt, jeweils entlang eines vorbestimmten Weges (31, 40, 42) des Vorrichtungsgehäuses (43) strömt, und
wobei die Fluidverteilungsvorrichtung (1) konfiguriert ist, um zwischen einem ersten Zustand, in dem das Fluid (3) von dem Quelleinlass (6) empfangen wird, der mit der Fluidquelle verbunden wird, und einem zweiten Zustand, in den die Fluidverteilungsvorrichtung automatisch geschaltet wird, zu wechseln, wenn der Behälter (2), der das Behälterfluid umfasst, mit dem Behältereinlass (8) gekoppelt ist, um das Behälterfluid (7) aus dem Behälter (2) aufzunehmen.

2. Fluidverteilungsvorrichtung (1) nach Anspruch 1, wobei der mit einem Gasventil (50) gekoppelte Gaseinlass (10) zum Aufnehmen eines gasförmigen Fluids (9), vorzugsweise Luft, nach dem Umschalten in den zweiten Zustand, konfiguriert ist, um das aufgenommene gasförmige Fluid (9) aus dem Gaseinlass (10) entlang seines entsprechenden, vorzugsweise inneren Gasweges (40), in den Behälter (2) zu leiten, während der Behälter (2) das Behälterfluid (7), das von dem Behältereinlass (8) entlang seines entsprechenden Behälterweges (42) zum Auslass (4) geleitet wird, freisetzt.

3. Fluidverteilungsvorrichtung (1) nach einem der vorangehenden Ansprüche, wobei in dem ersten Zustand das Quellfluid (3) von der Fluidquelle durch den Quelleinlass (6) bereitgestellt und durch das Vorrichtungsgehäuse (43) entlang seines vorbestimmten, vorzugsweise inneren Quellweges (31) zum Auslass (4) geleitet wird, und wobei die Fluidverteilungsvorrichtung (1) automatisch in den zweiten Zustand geschaltet wird, wenn der Behälter (2), der vorzugsweise das Behälterfluid (7) umfasst, mit dem Behältereinlass (8) gekoppelt wird.

4. Fluidverteilungsvorrichtung (1) nach einem der vorangehenden Ansprüche, wobei der Behälter (2), der das Behälterfluid (7) umfasst, mit einer Behältermasse bereitgestellt ist, wobei die Fluidverteilungsvorrichtung (1) konfiguriert ist, um beim Erreichen eines vorbestimmten Schwellenwerts der Behältermasse automatisch von dem zweiten Zustand in den ersten Zustand zurückzuschalten.

5. Fluidverteilungsvorrichtung (1) nach einem der vorangehenden Ansprüche, wobei das Behälterventil (49) für den Behältereinlass (8) innerhalb der Fluidverteilungsvorrichtung (1) oder innerhalb einer Behälterkappe (34) bereitgestellt ist.

6. Fluidverteilungsvorrichtung (1) nach einem der vorangehenden Ansprüche, ferner umfassend einen Kolben (36) und ein Volumen, das sich entlang einer axialen Richtung (60) erstreckt und parallel zu einer Längserstreckung des Kolbens (36) verläuft, wobei der Kolben (36) entlang der axialen Richtung (60) zwischen dem ersten und dem zweiten Zustand verschiebbar ist.

7. Fluidverteilungsvorrichtung (1) nach Anspruch 6, wobei der Kolben (36) an einem Ende mit dem Behältereinlass (8) oder dem Gaseinlass (10) in Eingriff steht, während das andere Ende lösbar mit dem Gaseinlass (10) bzw. dem Behältereinlass (8) in Eingriff bringbar ist, vorzugsweise wenn der Kolben (36) zum Erreichen des zweiten Zustands entlang der axialen Richtung (60) bewegt wird.

8. Fluidverteilungsvorrichtung (1) nach einem der Ansprüche 6 oder 7, wobei der Kolben (36) mit einem hohlen Inneren bereitgestellt ist, wobei das hohle Innere einen vorbestimmten inneren Gasweg (40) zum Leiten des gasförmigen Fluids (9) von dem Gaseinlass (10) zu einem Inneren des Behälters (2) bereitstellt.

9. Fluidverteilungsvorrichtung (1) nach einem der Ansprüche 6 bis 8, wobei der Kolben (36) automatisch entlang der axialen Richtung (60) in einer Richtung hin zu einer Basis (38) der Fluidverteilungsvorrichtung (1) verschoben ist, wenn der Behälter (2) mit dem Behältereinlass (8) gekoppelt ist, um eine Verbindung zwischen dem Behältereinlass (8) und dem Gaseinlass (10) zu erzielen, wobei die Basis (38) gegenüber dem Behältereinlass (8) angeordnet ist.

10. Fluidverteilungsvorrichtung (1) nach Anspruch 9, wobei ein Vorsprung, der sich von der Basis (38) entlang der axialen Richtung (60) in Richtung des Kolbens (36) erstreckt, zur Aufnahme des Kolbens (26) in dem zweiten Zustand bereitgestellt ist und wobei der Vorsprung durch ein Spannelement (46) aufgenommen ist, um eine Zugbelastung für den verschiebbaren Kolben (36) bereitzustellen, vorzugsweise ist eine Feder bereitgestellt, die beim Zusammendrücken durch den verschiebbaren Kolben (36) eine Federbelastung bereitstellt.

11. Fluidverteilungsvorrichtung (1) nach einem der Ansprüche 6 bis 10, wobei innerhalb des Vorrichtungsgehäuses (43) ein den Kolben (36) aufnehmendes Kolbengehäuse (44) bereitgestellt ist, das einen vorbestimmten Behälterweg (42) für das Behälterfluid (7) und/oder zumindest teilweise einen Quellweg (31) für das Quellfluid (3) definiert, und wobei das Kolbengehäuse (44) mindestens eine Durchgangsbohrung (37), vorzugsweise mindestens zwei Durchgangsbohrungen (37), zum Leiten des Behälterfluids (7) oder des Quellfluids (3) zum Inneren und/oder Äußeren des Kolbengehäuses (44) umfasst.

12. Fluidverteilungsvorrichtung (1) nach einem der vorangehenden Ansprüche, wobei der Behältereinlass (8) mit einem bidirektionalen Behälterventil oder mit zwei unidirektionalen Behälterventilen (49) zum Freisetzen des Behälterfluids (7) aus dem Behälter (2) in die Fluidverteilungsvorrichtung (1) und zum Aufnehmen des gasförmigen Fluids (9) aus der Fluidverteilungsvorrichtung (1) zum Leiten in den Behälter (2) ausgestattet ist, und wobei der Auslass (4) und/oder der Gaseinlass (10) und/oder der Quelleneinlass (6) mit unidirektionalen Ventilen (48, 50, 54) ausgestattet sind.

13. Fluidverteilungsvorrichtung (1) nach einem der vorangehenden Ansprüche, wobei das Quellventil (48) des Quelleinlasses (6) beim Umschalten in den zweiten Zustand geschlossen und beim Umschalten in den ersten Zustand geöffnet ist.

14. Fluidverteilungsvorrichtung (1) nach einem der vorangehenden Ansprüche, wobei die Fluidverteilungsvorrichtung (1) einen Einlass (32) zur Aufnahme des Behälters umfasst, der vorzugsweise konisch geformt ist, um eine Führung des Behälters (2) bereitzustellen.

15. Fluidverteilungsvorrichtung (1) nach einem der vorangehenden Ansprüche, wobei die Fluidverteilungsvorrichtung (1) mit einem Magnetring (58) zum Koppeln des Behälters (2) und der Fluidverteilungsvorrichtung (1) bereitgestellt ist, wobei der Magnetring (58) zwischen einer Anlagefläche von beiden bereitgestellt ist, vorzugsweise der Magnetring (58) ein Metall oder einen Metall-geladenen Kunststoff umfasst.

## Revendications

1. Dispositif de distribution de fluide (1) pour distribuer au moins un fluide (3, 7, 9) depuis au moins une entrée (6, 8, 10) vers une sortie (4) du dispositif de distribution de fluide (1), comprenant : un boîtier de dispositif (43) ayant
- une sortie (4) couplée à une vanne de sortie (54) pour relâcher ledit fluide (3, 7) depuis un conteneur (2) ou une source de fluide,
- une entrée de gaz (10) pour recevoir un fluide gazeux (9) depuis une source de gaz,
- une entrée de conteneur (8) pour recevoir un fluide de conteneur (7) depuis le conteneur (2), et
une entrée de source (6) pour recevoir un fluide de source (3) depuis la source de fluide, dans lequel chaque entrée (6, 8, 10) est connectable ou est couplée à une vanne respective (48, 49, 50) pour recevoir le fluide correspondant (3, 7, 9), dans lequel le fluide (3, 7, 9) passant à travers une des entrées (6, 8, 10) s'écoule respectivement le long d'un trajet prédéterminé (31, 40, 42) du boîtier de dispositif (43), et
dans lequel le dispositif de distribution de fluide (1) est configuré pour commuter entre un premier état, dans lequel le fluide (3) est reçu depuis l'entrée de source (6) qui est connectée à la source de fluide, et un deuxième état, vers lequel le dispositif de distribution de fluide est automatiquement commuté pour, quand le conteneur (2), comprenant le fluide de conteneur, est couplé à l'entrée de conteneur (8) pour recevoir le fluide de conteneur (7) depuis le conteneur (2).

2. Dispositif de distribution de fluide (1) selon la revendication 1, dans lequel l'entrée de gaz (10), couplée à une vanne de gaz (50), est configurée pour recevoir un fluide gazeux (9), de préférence de l'air, lors de la commutation vers le deuxième état, afin de guider le fluide gazeux reçu (9) depuis l'entrée de gaz (10) le long de son trajet de gaz correspondant (40), de préférence intérieur, jusque dans le conteneur (2), tandis que le conteneur (2) relâche le fluide de conteneur (7) qui est guidé depuis l'entrée de conteneur (8) le long de son trajet de conteneur correspondant (42) vers la sortie (4).

3. Dispositif de distribution de fluide (1) selon l'une des revendications précédentes, dans lequel, dans le premier état, le fluide de source (3) est fourni depuis la source de fluide à travers l'entrée de source (6) et est guidé à travers le boîtier de dispositif (43) le long de son trajet de source (31) prédéterminé, de préférence intérieur, vers la sortie (4), et dans lequel le dispositif de distribution de fluide (1) est automatiquement commuté jusque dans ledit deuxième état, quand le conteneur (2), comprenant de préférence le fluide de conteneur (7), est couplé à l'entrée de conteneur (8).

4. Dispositif de distribution de fluide (1) selon l'une des revendications précédentes, dans lequel le conteneur (2), comprenant le fluide de conteneur (7), est doté d'une masse de conteneur, dans lequel le dispositif de distribution de fluide (1) est configuré pour commuter automatiquement en retour depuis le deuxième état vers le premier état, quand un seuil prédéterminé de la masse de conteneur est atteint.

5. Dispositif de distribution de fluide (1) selon l'une des revendications précédentes, dans lequel la vanne de conteneur (49) pour l'entrée de conteneur (8) est prévue à l'intérieur du dispositif de distribution de fluide (1) ou à l'intérieur d'un capuchon de conteneur (34).

6. Dispositif de distribution de fluide (1) selon l'une des revendications précédentes, comprenant en outre un piston (36) et un volume s'étendant le long d'une direction axiale (60), qui est parallèle à une extension longitudinale du piston (36), dans lequel le piston (36) est déplaçable le long de la direction axiale (60) entre le premier et le deuxième état.

7. Dispositif de distribution de fluide (1) selon la revendication 6, dans lequel le piston (36) est engagé au niveau d'une extrémité à l'entrée de conteneur (8) ou à l'entrée de gaz (10), tandis que l'autre extrémité peut être engagée de manière détachable à l'entrée de gaz (10) ou à l'entrée de conteneur (8), respectivement, de préférence quand le piston (36) est déplacé le long de la direction axiale (60) pour atteindre le deuxième état.

8. Dispositif de distribution de fluide (1) selon l'une des revendications 6 ou 7, dans lequel le piston (36) est doté d'un intérieur creux, dans lequel l'intérieur creux constitue un trajet de gaz intérieur prédéterminé (40) pour guider le fluide gazeux (9) depuis l'entrée de gaz (10) vers un intérieur du conteneur (2).

9. Dispositif de distribution de fluide (1) selon l'une des revendications 6 à 8, dans lequel le piston (36) est déplacé automatiquement le long de la direction axiale (60) dans une direction vers une base (38) du dispositif de distribution de fluide (1) quand le conteneur (2) est couplé à l'entrée de conteneur (8) pour réaliser une connexion entre l'entrée de conteneur (8) et l'entrée de gaz (10), dans lequel la base (38) est située à l'opposé de l'entrée de conteneur (8).

10. Dispositif de distribution de fluide (1) selon la revendication 9, dans lequel il est prévu une projection s'étendant depuis la base (38) le long de la direction axiale (60) vers le piston (36) pour recevoir le piston (36) dans le deuxième état, et dans lequel la projection est logée au moyen d'un élément de tension (46) pour appliquer une charge de tension pour le piston déplaçable (36), il est prévu de préférence un ressort qui applique une charge de ressort quand il est comprimé par le piston déplaçable (36).

11. Dispositif de distribution de fluide (1) selon l'une des revendications 6 à 10, dans lequel il est prévu, à l'intérieur du boîtier de dispositif (43), un boîtier de piston (44) logeant le piston (36), définissant un trajet de conteneur prédéterminé (42) pour le fluide de conteneur (7) et/ou au moins en partie un trajet de source (31) pour le fluide de source (3), et dans lequel le boîtier de piston (44) comprend au moins un trou traversant (37), de préférence au moins deux trous traversants (37), pour guider le fluide de conteneur (7) ou le fluide de source (3) à l'intérieur et/ou à l'extérieur du boîtier de piston (44).

12. Dispositif de distribution de fluide (1) selon l'une des revendications précédentes, dans lequel l'entrée de conteneur (8) est dotée d'une vanne de conteneur bidirectionnelle ou de deux vannes de conteneur unidirectionnelles (49) pour relâcher le fluide de conteneur (7) depuis le conteneur (2) jusque dans le dispositif de distribution de fluide (1), et pour recevoir le fluide gazeux (9) depuis le dispositif de distribution de fluide (1) pour le guider jusque dans le conteneur (2), et dans lequel la sortie (4) et/ou l'entrée de gaz (10) et/ou l'entrée de source (6) sont dotées de vannes unidirectionnelles (48, 50, 54).

13. Dispositif de distribution de fluide (1) selon l'une des revendications précédentes, dans lequel la vanne de source (48) de l'entrée de source (6) est fermée lors de la commutation vers le deuxième état, et est ouverte lors de la commutation vers le premier état.

14. Dispositif de distribution de fluide (1) selon l'une des revendications précédentes, dans lequel le dispositif de distribution de fluide (1) comprend une admission (32) pour recevoir le conteneur, de préférence qui est de forme conique pour assurer un guidage du conteneur (2).

15. Dispositif de distribution de fluide (1) selon l'une des revendications précédentes, dans lequel le dispositif de distribution de fluide (1) est doté d'un anneau magnétique (58) pour coupler le conteneur (2) et le dispositif de distribution de fluide (1), dans lequel l'anneau magnétique (58) est prévu entre une surface de butée des deux, l'anneau magnétique (58) comprenant de préférence un métal ou une matière plastique chargée de métal.
